(19) Europäisches Patentamt
European Patent Office
Office européen des brevets

(11) Veröffentlichungsnummer: **0 051 144**
**B1**

# (12) EUROPÄISCHE PATENTSCHRIFT

(45) Veröffentlichungstag der Patentschrift: **28.03.84**

(51) Int. Cl.³: **C 08 F 246/00**, C 08 F 220/34, D 21 H 3/38, C 08 F 2/06

(21) Anmeldenummer: **81107476.4**

(22) Anmeldetag: **21.09.81**

## (54) Feinteilige, stickstoffhaltige Monomere einpolymerisiert enthaltende Polymerdispersion.

(30) Priorität: **23.10.80 DE 3039976**

(43) Veröffentlichungstag der Anmeldung: **12.05.82 Patentblatt 82/19**

(45) Bekanntmachung des Hinweises auf die Patenterteilung: **28.03.84 Patentblatt 84/13**

(84) Benannte Vertragsstaaten: **AT BE CH DE FR GB IT LI NL SE**

(56) Entgegenhaltungen:
**FR - A - 2 290 454**
**US - A - 3 706 722**

(73) Patentinhaber: **BASF Aktiengesellschaft, Carl-Bosch-Strasse 38, D-6700 Ludwigshafen (DE)**

(72) Erfinder: **Reichel, Fritz, Dr., Holunderweg 3, D-6945 Hirschberg (DE)**
Erfinder: **Richter, Konrad, Dr., Amsterdamer Strasse 14, D-6700 Ludwigshafen (DE)**
Erfinder: **Hoehr, Lothar, Dr., Giselherstrasse 14, D-6520 Worms (DE)**

**EP 0 051 144 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Feinteilige, stickstoffhaltige Monomere einpolymerisiert enthaltende Polymerdispersion

Aus der DE-OS-2 548 393 sind Leimungsmittel für die Masse- und Oberflächenleimung von Papier auf Basis anionischer Polymerisate in Dispersionsform bekannt, die in zwei Stufen hergestellt werden. Man polymerisiert dabei in der ersten Stufe in wässriger Lösung 30 bis 90 Gew.-% eines nichtionischen äthylenisch ungesättigten Monomeren mit 70 bis 10 Gew.-% einer äthylenisch ungesättigten $C_3$- bis $C_5$-Carbonsäure nach Art einer Lösungspolymerisation. In dieser Polymerlösung werden, bezogen auf 10 bis 60 Gew.-% des Lösungscopolymerisates, 90 bis 40 Gew.-% eines Gemisches von äthylenisch ungesättigten miteinander copolymerisierbaren Monomeren, die für sich alleine polymerisiert hydrophobe Copolymerisate mit einer Glastemperatur zwischen +60 und −40 °C bilden, nach Art einer Emulsionspolymerisation polymerisiert. Man erhält Dispersionen mit einem hohen Feststoffgehalt und einer relativ geringen Viskosität. Die Dispersionen ergeben alkalistabile Leimungen, sie sind jedoch nur im alkalischen Medium genügend scherstabil für die Anwendung in der Leimpresse.

Aus der DE-OS-2 452 585 ist ein Verfahren zur Herstellung von scherstabilen wässrigen Copolymerisat-Dispersionen durch Copolymerisation von äthylenisch ungesättigten Verbindungen bekannt, wobei auch stickstoffhaltige Monomere in das Polymerisat eingebaut werden. Die Polymerisation erfolgt in zwei Stufen, wobei die stickstoffhaltigen Monomeren zunächst mit carboxylgruppenhaltigen Monomeren in wässriger Phase copolymerisiert und anschliessend, gegebenenfalls nach Zusatz von niedrigmolekularen Emulgatoren, in der Polymerisatlösung eine Emulsionspolymerisation mit unpolaren Monomeren durchführt. Diese Dispersionen können zwar in Abwesenheit eines üblichen Emulgators in der zweiten Polymerisationsstufe hergestellt werden, sie haben dann aber einen niedrigeren LD-Wert und eine geringere Stabilität gegenüber den emulgatorhaltigen wässrigen Dispersionen.

Aus der DE-OS-2 454 397 ist ein Verfahren zur Herstellung kationischer wässriger Copolymerisat-Dispersionen bekannt, bei dem man in einer ersten Polymerisationsstufe in einer wässrigen Lösung bzw. Dispersion ein Copolymerisat eines K-Wertes von 20 bis 60 aus 70 bis 90 Gew.-% Styrol und/oder einem (Meth)-acrylsäureester und 10 bis 30 Gew.-% an monoolefinisch ungesättigten Monomeren mit tertiären, protonierten tertiären oder quaternären Stickstoffatomen herstellt und darauf in einer 2. Polymerisationsstufe unter gleichzeitiger Copolymerisation Acrylsäureester und/oder Butadien, Styrol und/oder Acrylnitril und/oder Methacrylsäuremethylester als wesentliche Monomeren sowie gegebenenfalls geringe Mengen an α,β-monoolefinisch ungesättigten Carbonsäuren polymerisiert. Die Monomeren werden dabei so ausgewählt, dass ein Copolymerisat mit einer Glastemperatur von −15 bis +60 °C erhalten wird. Die nach diesem Verfahren hergestellten Copolymerisat-Dispersionen werden beispielsweise als Überzugsmittel für Papier, Leder oder textile Flächengebilde sowie als Leimungsmittel für Papier verwendet. Die Wirksamkeit dieser Leimungsmittel ist jedoch noch verbesserungsbedürftig.

Aufgabe der Erfindung ist es, feinteilige wässrige Polymerisatdispersionen zur Verfügung zu stellen, die ein stickstoffhaltiges Monomeres einpolymerisiert enthalten, und die auch in emulgatorfreier Form sehr feinteilig und stabil sind.

Die Aufgabe wird erfindungsgemäss gelöst mit feinteiligen, stickstoffhaltige Monomere einpolymerisiert enthaltenden Polymerdispersionen, die durch eine zweistufige Polymerisation hergestellt sind, wobei man in der ersten Polymerisationsstufe eine Monomerenmischung, die pro 1 Mol

a) eines stickstoffhaltigen Monomeren der Formeln

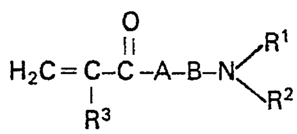

(I)

oder

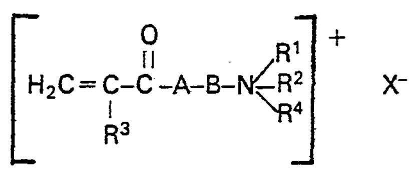

(II)

in denen
A = O, NH,
B = $C_nH_{2n}$, n = 1 bis 8,
$R^1$, $R^2$ = $C_mH_{2m+1}$, m = 1 bis 4,
$R^3$ = H, $CH_3$,
$X^-{}_4$ = $OH^-$, $CL^-$, $Br^-$, $CH_3$–$OSO_3H^-$ und
$R^4$ = $C_mH_{2m+1}$, m = 1 bis 4
bedeuten,

b) 2,5 bis 10 Mol mindestens eines nichtionischen, hydrophoben, äthylenisch ungesättigten Monomeren, wobei diese Monomeren, wenn sie für sich alleine polymerisiert werden, hydrophobe Polymerisate bilden,

c) 0,5 bis 1,5 Mol einer äthylenisch ungesättigten Carbonsäure oder Maleinsäureanhydrid und

d) 0 bis 7 Mol eines nichtionischen, hydrophilen, äthylenisch ungesättigten Monomeren enthält,

in einem mit Wasser mischbaren Lösungsmittel, das bis zu 15 Gew.-% Wasser enthalten kann, nach Art einer Lösungsmittelpolymerisation ein niedrig-molekulares Vorpolymerisat herstellt, das in einer 1%igen Lösung aus einer Mischung von 99 Gew.-Teilen Dimethylformamid und 1 Gew.-Teil Eisessig bei einer Temperatur von 20 °C eine Viskosität von 1,06 bis 1,40 (gemessen mit einem Ubbelohde-Viskosimeter) hat,

die Lösung des Vorpolymerisats mit Wasser im Gew.-Verhältnis 1:3 bis 1:50 verdünnt und in dieser Polymerlösung in der zweiten Stufe der Polymerisation, bezogen auf 1 Gew.-Teil des Lösungspolymerisats, 1 bis 32 Gew.-Teile mindestens eines nichtionischen, hydrophoben, äthylenisch ungesättigten Monomeren, wobei diese Monomeren den Monomeren b) des Vorpolymerisates entsprechen, nach Art einer Emulsionspolymerisation in Gegenwart von üblichen Mengen wasserlöslicher Polymerisationsinitiatoren polymerisiert.

Das niedrigmolekulare Vorpolymerisat, das in der ersten Polymerisationsstufe hergestellt wird, enthält als Komponente (a) mindestens ein stickstoffhaltiges Monomeres, das eine Amino- und/oder quaternäre Aminogruppe trägt. Verbindungen dieser Art haben die allgemeine Formel

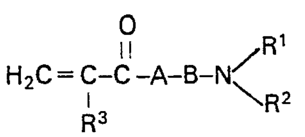

(I)

in der
A = O, NH,
B = $C_nH_{2n}$, n = 1 bis 8,
$R^1$, $R^2$ = $C_mH_{2m+1}$, m = 1 bis 4 und
$R^3$ = H, $CH_3$
bedeutet.

Die quaternierten Verbindungen können mit Hilfe der folgenden Formel

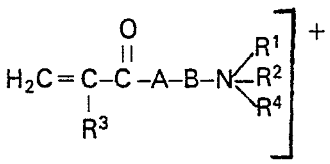

$X^-$ (II)

$X^-$ = $OH^-$, $Cl^-$, $Br^-$, $CH_3$–$OSO_3H^-$
$R^4$ = $C_mH_{2m+1}$, m = 1 bis 4
charakterisiert werden, Die übrigen Substituenten haben die oben angegebene Bedeutung.

Die Verbindungen der Formel II werden in der Regel als kationische Monomeren, die der Formel I als basische Monomeren bezeichnet. Basische, äthylenisch ungesättigte Monomere sind beispielsweise Acrylsäure- und Methacrylsäureester von Aminoalkoholen, z.B. Diäthylaminodiäthylacrylat, Diäthylaminoäthylmethacrylat, Dimethylaminopropylacrylat, Dimethylaminopropylmethacrylat, Dibutylaminopropylacrylat, Dibutylaminopropylmethacrylat, Dimethylaminoneopentylacrylat, Aminogruppen enthaltende Derivate des Acrylamids oder Methacrylamids, wie Acrylamidodimethylpropylamin, Methacrylamidodimethylpropylamin und Methacrylamidodiethylpropylamin.

Die quaternären Verbindungen der Formel II werden erhalten, indem man die basischen Monomeren der Formel I mit bekannten Quaternisierungsmitteln umsetzt, z.B. mit Benzylchlorid, Äthylchlorid, Butylbromid, Dimethylsulfat und Diäthylsulfat. Diese Monomeren verlieren in der quaternisierten Form ihren basischen Charakter.

Die Monomeren der Gruppe (b) für die Herstellung des Vorpolymerisats sind nichtionische, hydrophobe, äthylenisch ungesättigte Verbindungen. Es handelt sich hierbei um solche Monomeren, die in Wasser nicht merklich löslich sind und hydrophobe Polymerisate bilden. Solche Monomere sind beispielsweise vinylaromatische Monomere, wie Styrol und substituierte Styrole, z.B. Methylstyrol oder Äthylstyrol, Carbonsäureester aus äthylenisch ungesättigten $C_3$- bis $C_6$-Mono- und -Di-Carbonsäuren und einwertigen Alkoholen mit 1 bis 18, vorzugsweise 4 bis 12 Kohlenstoffatomen, die Nitrile der genannten Carbonsäuren sowie Vinylester von 1 bis 12 Kohlenstoffatome enthaltenden aliphatischen Carbonsäuren, Alkene mit 2 bis 10 Kohlenstoffatomen, vorzugsweise solche mit endständiger Doppelbindung, wie Äthylen oder Diolefine, insbesondere Butadien und Isopren. Vorzugsweise verwendet man aus dieser Monomerengruppe Styrol, Acrylsäureester, Methacrylsäureester, Acrylnitril, Methacrylnitril, Vinylacetat, Vinylpropionat und Butadien. Einzelne Verbindungen sind Methylacrylat, Äthylacrylat, Propylacrylat, Isopropylacrylat, n-Butylacrylat, Isobutylacrylat, Äthylhexylacrylat, Laurylacrylat und die entsprechenden Ester der Methacrylsäure.

Es ist selbstverständlich möglich, auch Mischungen der genannten Monomeren zu verwenden, z.B. Mischungen aus Styrol und Äthylhexylacrylat, Styrol und n- oder iso-butylacrylat, Styrol, Isobutylacrylat und Acrylnitril oder Vinylisobutyläther. Diese Gruppe von Monomeren ist nichtionisierbar und bildet, wenn sie für sich allein polymerisiert wird, hydrophobe Polymerisate, d.h. Polymerisate, die sich nicht in Wasser lösen. Die Monomeren der Gruppe (b) des Vorpolymerisats sind, bezogen auf 1 Mol der Monomeren der Gruppe (a), zu 2,5 bis 10, vorzugsweise 3 bis 8 Mol in der Monomerenmischung enthalten.

Als Monomere der Gruppe (c) werden äthylenisch ungesättigte Carbonsäuren verwendet. Es handelt sich bei dieser Gruppe von Monomeren im wesentlichen um $C_3$- bis $C_6$-Mono- und -Di-Carbonsäuren, z.B. Acrylsäure, Methacrylsäure, Itaconsäure, Maleinsäure, Maleinsäureanhydrid, Styrolcarbonsäuren und Halbester der Maleinsäure mit Alkoholen mit $C_1$- bis $C_8$-Kohlenstoffatomen. Vorzugsweise verwendet man Acrylsäure und Methacrylsäure. Die Monomeren der Gruppe (c) sind, bezogen auf 1 Mol der Monomeren der Gruppe (a), zu 0,5 bis 1,5, vorzugsweise 0,7 bis 1,4 Mol in der Monomerenmischung enthalten.

Als Monomere (d), die wahlweise zur Modifizierung der Eigenschaften des Vorpolymerisats eingesetzt werden, verwendet man nichtionische, hydrophile, äthylenisch ungesättigte Monomere, z.B. Amide oder substituierte Amide von äthylenisch ungesättigten Mono- oder Dicarbonsäuren, z.B. Acrylamid, Methacrylamid, N-Methylolacrylamid, N-Methylolmethacrylamid, sowie die mit $C_1$- bis $C_6$-einwertigen Alkoholen verätherten N-Methylolacrylamide und N-Methylolmethacrylamiden. Die Monomeren der Gruppe (d) sind, bezogen auf 1 Mol der Monomeren der Gruppe (a), zu 0 bis 7, vorzugsweise 0 bis 3 Mol in der Monomerenmischung enthalten.

Die genannten Monomeren werden in einem

mit Wasser mischbaren organischen Lösungsmittel, das bis zu 15 Gew.-% Wasser enthalten kann, zu einem niedrigmolekularen Produkt polymerisiert. In der bevorzugten Ausführungsform des erfindungsgemässen Verfahrens soll das Lösungsmittel die Monomeren als auch das bei der Vorpolymerisation in der ersten Stufe entstehende Copolymerisat homogen lösen. Als Lösungsmittel verwendet man beispielsweise Ameisensäure, Essigsäure, Propionsäure, Alkohole, wie Methanol, Äthanol und Isopropanol, Ketone, wie Aceton und Methyläthylketon, oder Amide, wie Dimethylformamid. Man kann auch Lösungsmittelmischungen verwenden, z.B. Mischungen aus Essigsäure und Dimethylformamid, Essigsäure und Isopropanol. Besonders vorteilhaft sind Mischungen aus Essigsäure und Aceton, weil der Polymerisationsinitiator meistens gelöst in Aceton zum Reaktionsgemisch zugegeben wird. Falls man Alkohole, Ketone oder Amide als Lösungsmittel einsetzt, ist es erforderlich, die basischen Monomeren zu neutralisieren. Vorzugsweise wird Essigsäure als Lösungsmittel verwendet und unter weitgehendem Ausschluss von Wasser gearbeitet.

In der ersten Stufe der Polymerisation werden amphotere Lösungscopolymerisate hergestellt. Die amphoteren Copolymerisate enthalten die Monomeren der Gruppe (a) und der Gruppe (c) vorzugsweise in stöchiometrischen Mengen bzw. die Monomeren der Gruppe (c) im Unterschuss. Das Gewichtsverhältnis von hydrophoben (Monomere der Gruppe (b)) zu hydrophilen Bestandteilen im Vorpolymerisat (Monomere der Gruppen (a), (c) und (d)) liegt vorzugsweise in dem Bereich von 2:1 bis 7:1. Die Herstellung des Vorpolymerisates in der ersten Stufe der Polymerisation erfolgt bei Temperaturen von 20 bis 160, vorzugsweise 60 bis 140 °C. Es wird ein niedrigmolekulares, statistisches Copolymerisat hergestellt, das einen Polymerisationsgrad von 5 bis 100, vorzugsweise von 10 bis 50 hat. Die Viskositäten dieser niedrigmolekularen Vorpolymerisate betragen in einer 1%igen Lösung aus einer Mischung von 99 Gew.-Teilen Dimethylformamid und 1 Gew.-Teil Eiseissig bei einer Temperatur von 20 °C 1,06 bis 1,40 ($\eta_{rel.}$, gemessen mit einem Ubbelohde-Viskosimeter).

Die niedrigmolekularen amphoteren Vorpolymerisate werden prinzipiell nach bekannten Methoden hergestellt, indem man bei der Polymerisation in Anwesenheit von grossen Reglermengen polymerisiert (Konzentrationen von 0,1 bis 15 Gew.-%, Regler sind z.B. Thioglykolsäure, Dodecylmerkaptan oder Kohlenstofftetrabromid) oder sehr hohe Initiatorkonzentrationen anwendet. Besonders günstig ist es, grosse Initiatorkonzentrationen zu verwenden, z.B. 1 Mol Initiator pro 17 bis 160 Mol der zu polymerisierenden Monomeren. Die Zerfallsgeschwindigkeit des Initiators liegt in der Grössenordnung von $10^{-4}$ bis $10^{-2}$ Mol/sec. Diese Initiatoren sind in dem organischen, mit Wasser mischbaren Lösungsmittel löslich. Es handelt sich hierbei im einzelnen um Azoisobuttersäuredinitril, tert. Butylperbenzoat, Benzoylperoxid, tert. Butylhydroperoxid sowie Wasserstoffperoxid in Gegenwart von Eisensalzen. Man erhält auf diese Weise Copolymerisatlösungen, die 20 bis 70, vorzugsweise 30 bis 65 Gew.-% des niedrigmolekularen Vorpolymerisates in Lösung enthalten.

Die Copolymerisatlösung wird im Anschluss an die erste Polymerisationsstufe im Gewichtsverhältnis 1:3 bis 1:50 mit Wasser verdünnt. Falls als Lösungsmittel keine Säure verwendet wurde, ist es erforderlich, die Lösung anzusäuern. Aufgrund des Gehaltes an basischen Aminogruppen bzw. quaternären Ammoniumgruppierungen im Polymerisat ist es in Wasser löslich. Die Konzentration des Lösungspolymerisates in der mit Wasser verdünnten Lösung liegt in dem Bereich von 2 bis 25 Gew.-%. Die wässrige Polymerlösung, aus der das organische Lösungsmittel gegebenenfalls abdestilliert werden kann, dient als Vorlage für die zweite Polymerisationsstufe, in der vorwiegend nichtionische hydrophobe äthylenisch ungesättigte Monomere nach Art einer Emulsionspolymerisation polymerisiert werden. Bezogen auf 1 Gew.-Teil des Lösungspolymerisates verwendet man 1 bis 4 Gew.-Teile des nichtionischen, hydrophoben äthylenisch ungesättigten Monomeren oder eines Gemisches dieser Monomerengruppe. Hierfür kommen diejenigen Monomeren in Betracht, die bei der Herstellung des Vorpolymerisates in der ersten Stufe als Monomer der Gruppe (b) bezeichnet wurden. Vorzugsweise werden aus dieser Gruppe Styrol, $C_4$- bis $C_8$-Alkylacrylate und -methacrylate, wie Butylester oder Acrylsäure und Methacrylsäure, Hexylacrylate und 2-Äthylhexylacrylate, Acrylnitril, Methacrylnitril, Vinylacetat oder Vinylpropionat benutzt.

Die Emulsionspolymerisation erfolgt in dem Temperaturbereich von 40 bis 150, vorzugsweise 60 bis 100 °C unter Verwendung üblicher Mengen an wasserlöslichen Polymerisationsinitiatoren. Die obere Grenze für diese Initiatoren beträgt 4 Gew.-%, bezogen auf die zu polymerisierenden Monomeren. Geeignete Initiatoren für die Emulsionspolymerisation sind beispielsweise organische Peroxide, Hydroperoxide, Wasserstoffperoxide und anorganische Peroxide sowie Redox-Systeme, z.B. Wasserstoffperoxid/Ascorbinsäure oder tert.-Butylhydroxid/Ascorbinsäure. In der zweiten Polymerisationsstufe werden die Monomeren entweder unverdünnt oder in Form einer wässrigen Emulsion dem Polymerisationsansatz zugeführt. Zum Emulgieren der Monomeren in Wasser kann man beispielsweise einen Teil der wässrigen Lösung des Vorpolymerisates der ersten Polymerisationsstufe oder auch übliche Emulgatoren verwenden. Die Emulsionspolymerisation in der zweiten Stufe wird vorzugsweise in Abwesenheit von üblichen Emulgatoren durchgeführt. Es können jedoch zusätzlich Emulgatoren in einer Menge bis zu 3 Gew.-%, bezogen auf die Polymerisate in der ersten und zweiten Stufe, mitverwendet werden. Die üblichen Emulgatoren haben kaum einen Einfluss auf die Teilchengrösse der erfindungsgemässen Dispersion. Geeignete Emulgatoren, die bei der Polymerisation mitverwendet werden können; sind Produkte, die durch Ethoxylierung von Phenol oder Phenolderivaten erhalten werden. Solche Emulgatoren enthalten 4 bis 30 Mol Äthylenoxid pro Mol Phenol. Ausserdem eignen sich kationische und amphotere Emulgatoren, beispielsweise Dimethyl-$C_{22}H_{24}$-Fettalkylbenzylammoniumchlorid oder die Verbindung der Formel

$$C_{16}H_{25}-CONH-(CH_2)_3-N^+(CH_3)_2-CH_2-COO^-$$

Es ist selbstverständlich auch möglich, nichtionische und anionische Emulgatoren gemischt zu verwenden. Die Emulgatoren können auch nach der Emulsionspolymerisation der zweiten Stufe zur Dispersion zugegeben werden, um die Eigenschaften der Dispersion zu modifizieren. Bezogen auf das dispergierte Polymere verwendet man 0,05 bis 3 Gew.-% eines Emulgators oder Emulgatorengemisches.

Der pH-Wert des Reaktionsgemisches wird in der zweiten Polymerisationsstufe auf Werte von 2 bis 5 eingestellt.

Nach dem zweistufigen Polymerisationsverfahren erhält man feinteilige, stickstoffhaltige Monomeren einpolymerisiert enthaltende Polymerisatdispersionen, deren Teilchengrösse in dem Bereich von 25 bis 250 nm liegt. Dieser Bereich der Teilchengrösse liegt damit unterhalb des Bereiches von Polymerisatdispersionen, die z.B. nach dem Verfahren der DE-OS-2 452 585 erhalten werden. Ein Mass für die Teilchengrösse der Dispersion ist der LD-Wert.

Zur Bestimmung des LD-Wertes (Lichtdurchlässigkeit) wird die Dispersion in 0,01%iger, wässriger Lösung in einer Küvette mit 2,5 cm Kantenlänge mit Licht der Wellenlänge 546 nm vermessen. Mit Hilfe der «Mie-Theorie» lässt sich daraus der Teilchendurchmesser berechnen (vgl. B. Verner, M. Bàrta, B. Sedlàcek, Tables of Scattering Functions for Spherical Particles, Prag 1976, Edice Marco, Rada D-DATA, SVAZEK D-1.

Filme aus getrockneten, amphoteren Dispersionen sind deutlich wasserfester als Filme aus ähnlich aufgebauten kationischen Dispersionen. Die Filme haben eine gute Haftung auf Glas und Metallen. Die amphoteren Dispersionen haben, falls sie keine quarternären Aminoverbindungen enthalten, einen pH abhängigen Bereich, in dem sie koagulieren (isoelektrischer Punkt). Bei niedrigem oder höherem pH-Wert sind sie stabile Dispersionen. Der isoelektrische Punkt kann über das Verhältnis der Monomeren der Gruppe (a):(c) im Lösungscopolymerisat um 2 bis 3 pH Einheiten verschoben werden. Bei einem Molverhältnis der Monomeren (a):(c) von 1 liegt er etwa bei pH 8.

Die erfindungsgemässen Dispersionen können einer Reihe von Anwendungen zugeführt werden, z.B. zum Beschichten oder Imprägnieren von Papier und Baustoffen sowie als Masse- und Oberflächenleimungsmittel für Papier. Bei der Oberflächenleimung von Papier wird die erfindungsgemässe Dispersion durch Zugabe von Wasser auf eine Gesamtpolymerisatkonzentration eingestellt, die für Präparationslösungen allgemein üblich ist, z.B. auf einen Polymerisatgehalt von 0,05 bis 3,0 Gew.-%. Die Menge an Copolymerisat, die auf das Papier für Leimungszwecke aufgebracht wird, liegt in der Regel zwischen 0,02 und 1,5, vorzugsweise zwischen 0,3 und 0,8 Gew.-%, bezogen auf trockenen Faserstoff. Zur Herstellung der Präparationslösungen werden die Dispersionen, deren Feststoffgehalt 10 bis 50 Gew.-% betragen, mit Wasser verdünnt. Die Präparationslösungen können ausserdem weitere Hilfsstoffe enthalten, z.B. Stärke, Farbstoffe und Wachsemulsionen.

Die erfindungsgemässen Dispersionen können auch als Masseleimungsmittel verwendet werden. Sie sind dabei im gesamten sauren pH-Bereich als Leimungsmittel wirksam.

Die Anwendung der erfindungsgemässen Dispersionen als Oberflächenleimungsmittel geschieht in der üblichen Weise, d.h. meist in Kombination mit Stärke oder synthetischen Trockenverfestigungsmitteln, wobei die Präparationslösung in der Regel mit Hilfe einer Leimpresse auf das Papier aufgebracht wird. Es ist selbstverständlich auch möglich, die Präparationslösung durch Sprühen oder Tauchen oder z.B. mit Hilfe des Wasserschabers auf die Papierbahnen aufzubringen. Das mit der Präparationslösung behandelte Papier wird anschliessend getrocknet. Die Leimung ist nach dem Trocknen der Papierbahn bereits voll ausgebildet.

Die in den Beispielen angegebenen Teile sind Gew.-Teile, die Prozentangaben beziehen sich ebenfalls auf das Gewicht der Stoffe. Der Leimungsgrad der Papiere wurde mit Hilfe des Cobb-Wertes nach DIN 53 132 und der Tintenschwimmzeit in Minuten bis zum 50%igen Durchschlag mit einer Normtinte nach DIN 53 126 bestimmt. Für die Prüfung der Leimungswirkung der erfindungsgemässen Dispersionen wurden zwei verschiedene Prüfpapiere verwendet. Das Prüfpapier A hatte folgende Stoffzusammensetzung:

50% gebleichter Sulfitzellstoff
50% gebleichter Sulfatzellstoff
25% Chinaclay, bezogen auf trockenen Zellstoff
2% Alaun, bezogen auf trockenes Papier

Papier B
50% gebleichter Sulfitzellstoff
50% gebleichter Sulfatzellstoff
25% Chinaclay, bezogen auf trockenen Zellstoff
4% Alaun, bezogen auf trockenes Papier.

Die Prüfpapiere waren in der Masse ungeleimt, hatten ein Flächengewicht von 70 g/m²; der Mahlgrad war 25°SR und der Aschegehalt betrug 14%. Die Präparationslösungen enthielten, wenn nicht anders angegeben wurde, jeweils 1,5 g/l des Copolymerisates, bezogen auf den Feststoffgehalt der Dispersionen, und 60 g/l einer oxidativ abgebauten Stärke. Die Flottenaufnahme lag in allen Fällen bei 90%, bezogen auf trockenes Papier.

Beispiel 1

In einem Rührkessel wurden 60 Teile Essigsäure, 60 Teile (5,77 Mol) Styrol und 33 Teile (1,94 Mol) Dimethylaminopropylmethacrylamid und 15 Teile (2,08 Mol) Acrylsäure mit 1 Teil Azoisobuttersäuredinitril gemischt und auf eine Temperatur von 85 °C erhitzt. Nachdem man die Reaktionspartner eine 1/2 Stunde auf 85 °C erhitzt hatte, wurde innerhalb von 1 Stunde eine Lösung aus 1,25 Teilen Azoisobuttersäuredinitril in 5 Teilen Aceton zugegeben und die Temperatur des Reaktionsgemisches auf 85 bis 90 °C gehalten. Nach weiteren 30 min war die 1. Stufe der Polymerisation beendet. Man erhielt eine homogene Polymerlösung, die in 590 Gew.-Teilen Wasser zu einer klaren Lösung gelöst und auf eine Temperatur von 85 °C erhitzt wurde. Nach Zugabe von 20 Teilen 6%igem Wasserstoffperoxid und 0,04 Gew.-Teilen $FeSO_4.7H_2O$ wurde in der 2. Stufe der Polymerisation separat 80 Gew.-Teile 6%iges Wasserstoffperoxid und eine Mischung aus 126 Teilen Isobutylacrylat und 66 Teilen Styrol innerhalb von 2 Stunden zugegeben. Die Temperatur betrug während der Polymerisation in der 2. Stufe 84 bis 87 °C. Sie wurde nach Beendigung des Monomerenzulaufs und des Initiatorzulaufs noch 1 Stunde aufrechterhalten.

Es resultierte eine feinteilige Dispersion mit einem Feststoffgehalt von 32% und einem LD-Wert von 98. Die Dispersion wurde als Oberflächenleimungsmittel für Papier verwendet. Sie ergab für das Prüfpapier A einen Cobb-Wert von 21 und eine Tintenschwimmzeit von 23 Minuten und für das Prüfpapier B einen Cobb-Wert von 21 und eine Tintenschwimmzeit von 13 Minuten.

Beispiel 2

In einem Rührkessel werden 60 Teile Essigsäure, 60 Teile (5,77 Mol) Styrol, 33 Teile (1,94 Mol) Dimethylaminopropylmethacrylamid, 15 Teile (2,08 Mol) Acrylsäure und 1 Teil Azoisobuttersäuredinitril gemischt und auf eine Temperatur von 85 °C erhitzt. Nachdem die Monomerenmischung eine 1/2 Stunde auf eine Temperatur von 85 °C erhitzt worden ist, wurde innerhalb von 1 Stunde eine Lösung von 1 Teil Azoisobuttersäuredinitril in 5 Teilen Aceton zugesetzt. 30 min nach Beendigung der Initiatorzugabe wurde die Lösung des Vorpolymerisates in 300 Teilen Wasser zu einer homogenen Lösung gelöst. Die Lösung wurde auf eine Temperatur von 85 °C erhitzt und dann ein Redox-Initiator bestehend aus 20 Teilen 6%iger Wasserstoffperoxidlösung und 0,04 Teilen $FeSO_4.7H_2O$ zugesetzt. Zu der auf 85 °C erhitzten Lösung werden innerhalb von 2 Stunden aus 2 getrennten Gefässen 80 Teile 6%iges Wasserstoffperoxid und aus dem anderen eine Emulsion von 126 Teilen Isobutylacrylat, 66 Teilen Styrol und 3 Teilen Dimethyldodecylbenzylammoniumchlorid (Emulgator) in 300 Teilen Wasser zugeführt. Zur Nachpolymerisation wird nach Abschluss der Monomerenzugabe die Temperatur des Reaktionsgemisches noch 1 Stunde auf 85 °C gehalten. Man erhält eine feinteilige wässrige Dispersion mit einem Feststoffgehalt von 30,3% und einem LD-Wert von 99.

Beispiel 3

In einem Rührkessel werden 60 Teile Essigsäure, 60 Teile (5,77 Mol) Styrol, 33 Teile (1,94 Mol) Dimethylaminopropylmethacrylamid, 15 Teile (2,08 Mol) Acrylsäure und 1 Teil Azoisobuttersäuredinitril gemischt und auf eine Temperatur von 85 °C erhitzt. Nachdem die Mischung 30 min bei 85 °C gehalten wurde, fügte man innerhalb von 1 Stunde eine Lösung von 1,25 Teilen Azoisobuttersäuredinitril in 5 Teilen Aceton zu. 30 min nach Zugabe der Initiatorlösung wurde das Vorpolymerisat in 440 Teilen Wasser zu einer homogenen Lösung gelöst (die Viskosität des Vorpolymerisates $\eta_{rel.} = 1,14$).

40 Teile der Vorpolymerisatlösung werden dem Kessel entnommen und als Emulgator für die Herstellung des Emulsionszulaufs der 2. Polymerisationsstufe verwendet. Der Rest der Vorpolymerisatlösung verbleibt im Rührkessel und wird auf eine Temperatur von 85 °C erhitzt. Nach Zugabe von 20 Teilen 6%iger Wasserstoffperoxidlösung und 0,04 Teilen $FeSO_4.7H_2O$ werden innerhalb von 2 Stunden 2 separate Zuläufe, und zwar 80 Teile 6%iges Wasserstoffperoxid und eine Emulsion von 126 Teilen Isobutylacrylat und 66 Teilen Styrol in 300 Teilen Wasser und 40 Teilen der Vorpolymerisatlösung, gleichmässig zugegeben. Eine Stunde nach Beendigung der Initiator- und Monomerenzugabe erhält man eine feinteilige Dispersion mit einem Feststoffgehalt von 26,5% und einem LD-Wert von 99.

Beispiel 4

In einem Rührkessel wurden 60 Teile Eisessig, 60 Teile (5,77 Mol) Styrol, 33 Teile (1,94 Mol) Dimethylaminopropylmethacrylamid, 15 Teile (2,08 Mol) Acrylsäure und 3 Teile Azoisobuttersäuredinitril gemischt und auf 85 °C erhitzt. Nach 30 Minuten werden innerhalb von 1 Stunde 6 Teile Azoisobuttersäuredinitril zugesetzt. Nach weiteren 30 min wird das Vorpolymerisat in 590 Teilen Wasser gelöst und die Lösung auf 85 °C erhitzt. Dann fügt man 20 Teile einer 6%igen Wasserstoffperoxidlösung und 0,04 Teile $FeSO_4.7H_2O$ zu. Innerhalb von 2 Stunden gibt man kontinuierlich aus 2 separaten Gefässen einmal 80 Teile einer 6%igen wässrigen Wasserstoffperoxidlösung und zum anderen ein Gemisch aus 126 Teilen Isobutylacrylat und 66 Teilen Styrol gleichmässig zu. Nach einstündiger Nachreaktion resultiert eine feinteilige Dispersion mit einem Feststoffgehalt von 30,8% und einem LD-Wert von 99.

Beispiel 5

In einem Rührkessel werden 60 Teile Essigsäure, 60 Teile (5,77 Mol) Styrol, 21 Teile (1,94 Mol) Dimethylaminopropylmethacrylamid, 11 Teile (2,08 Mol) Acrylsäure und 3 Teile Azoisobuttersäuredinitril gemischt und auf 85 °C erhitzt. Nach 30 min werden innerhalb von 1 Stunde 6 Teile Azoisobuttersäuredinitril zugesetzt. Nach

weiteren 30 min wird das Vorpolymerisat in 590 Teilen Wasser unter Erhitzen auf 85 °C gelöst. Dann werden 20 Teile einer 6%igen Wasserstoffperoxidlösung und 0,04 Teile $FeSO_4.7H_2O$ zugefügt. Innerhalb von 2 Stunden gibt man dann gleichmässig aus 2 verschiedenen Vorrichtungen einmal 80 Teile 6%iges Wasserstoffperoxid als Initiator und zum anderen ein Gemisch von 99 Teilen Isobutylacrylat und 99 Teilen Styrol zu. Nach einer Nachreaktion von 1 Stunde erhält man eine feinteilige Dispersion mit einem Feststoffgehalt von 28,5% und einem LD-Wert von 99.

Beispiel 6

In einem Rührkessel werden 60 Teile Essigsäure, 33 Teile (2,58 Mol) Butylacrylat, 33 Teile (3,17 Mol) Styrol, 18 Teile (1,06 Mol) Dimethylaminopropylmethacrylamid, 9 Teile (1,25 Mol) Acrylsäure, 9 Teile (1,27 Mol) Acrylamid und 3 Teile Azoisobuttersäuredinitril gemischt und auf 85 °C erhitzt. Nach 35 min beginnt man mit der Zugabe von 6 Teilen Azoisobuttersäuredinitril. Die Starterzugabe ist nach 1 Stunde beendet. 30 min nach Beendigung der Starterzugabe wird das Vorpolymerisat in 590 Teilen Wasser unter Erhitzen auf 85 °C homogen gelöst. Dann werden 20 Teile einer wässrigen 6%igen Wasserstoffperoxidlösung und 0,04 Teile $FeSO_4.7H_2O$ zugesetzt. Anschliessend fügte man innerhalb von 2 Stunden jeweils aus separaten Zulaufbehältern 80 Teile einer 6%igen wässrigen Wasserstoffperoxidlösung und zum anderen ein Gemisch aus 156 Teilen Acrylnitril und 36 Teilen Isobutylacrylat zu. Zur Nachreaktion wurde die Mischung noch 1 Stunde lang auf eine Temperatur von 85 °C erhitzt. Man erhielt eine Dispersion mit einem Feststoffgehalt von 30,5% und einem LD-Wert von 95.

Beispiel 7

In einem Rührkessel werden 60 Teile Essigsäure, 60 Teile (5,77 Mol) Styrol, 33 Teile (1,94 Mol) Dimethylaminopropylmethacrylamid, 15 Teile (2,08 Mol) Acrylsäure, 1 Teil Azoisobuttersäuredinitril und 2 Teile (0,22 Mol) Thioglykolsäure gemischt und auf 85 °C erhitzt. Diese Temperatur wird 30 min lang aufrechterhalten und danach eine Lösung von 1,25 Teilen Azoisobuttersäuredinitril, 2 Teilen Thioglykolsäure in 5 Teilen Aceton innerhalb von 1 Stunde kontinuierlich zugegeben. 30 min nach Beendigung der Zugabe der zuletzt genannten Lösung werden 590 Teile Wasser zum Vorpolymerisat zugesetzt und die Mischung auf 85 °C erhitzt und bei dieser Temperatur mit 20 Teilen einer wässrigen 6%igen Wasserstoffperoxidlösung und 0,04 Teilen $FeSO_4$ mit $7H_2O$ versetzt. Anschliessend wurden in der zweiten Stufe der Polymerisation innerhalb von 2 Stunden 80 Teile einer 6%igen wässrigen Wasserstoffperoxidlösung und separat davon ein Gemisch aus 126 Teilen Isobutylacrylat und 66 Teilen Styrol gleichmässig zugegeben. Nach 1stündiger Nachreaktion resultierte eine Dispersion mit einem LD-Wert von 99 und einem Feststoffgehalt von 30,6%.

Beispiel 8

In einem Rührkessel wurden 60 Teile Essigsäure, 60 Teile (5,77 Mol) Styrol, 33 Teile (1,94 Mol) , Dimethylaminopropylmethacrylamid, 15 Teile (2,08 Mol) Acrylsäure, 2 Teile Thioglykolsäure (als Regler) und 1 Teil Azoisobuttersäuredinitril gemischt und auf 85 °C erhitzt. Die Mischung wird 30 Minuten auf 85 °C gehalten und dann innerhalb von 1 Stunde mit einer Lösung von 1,25 Teilen Azoisobuttersäuredinitril in 2 Teilen Thioglykolsäure und 5 Teilen Aceton versetzt. 30 Min nach Zugabe der zuletzt genannten Lösung wird das Vorpolymerisat in 590 Teilen Wasser gelöst und bei 85 °C mit 20 Teilen einer 6%igen wässrigen Wasserstoffperoxidlösung, 1,5 Teilen Thioglykolsäure und 0,04 Teilen $FeSO_4.7H_2O$ versetzt. Der 2. Polymerisationsstufe wurden dann innerhalb von 2 Stunden 80 Teile einer wässrigen 6%igen Wasserstoffperoxidlösung und ein Gemisch aus 126 Teilen Isobutylacrylat und 66 Teilen Styrol aus getrennten Vorratsgefässen gleichmässig zugegeben. Nach Beendigung der Monomeren- und Initiatorzugabe wurde das Reaktionsgemisch noch 1 Stunde auf eine Temperatur von 85 °C erhitzt. Man erhielt eine Dispersion mit einem LD-Wert von 99 und einem Feststoffgehalt von 30,4%.

Beispiel 9

In einem Rührkessel, der mit einem Rückflusskühler ausgestattet ist, wurden 60 Teile (5,77 Mol) Styrol, 33 Teile (1,94 Mol) Dimethylaminopropylmethacrylamid, 15 Teile (2,08 Mol) Acrylsäure, 60 Teile Essigsäure und 9 Teile tert.-Butylperbenzoat gemischt und auf 120 °C erhitzt. Nachdem man die Mischung 2 Stunden auf 120 °C erhitzt hatte, kühlte man sie auf 85 °C ab und löste das Vorpolymerisat der 1. Stufe in 590 Teilen Wasser. Die Polymerisation in der 2. Stufe wurde dann bei 85 °C durchgeführt. Man gibt 0,04 Teile $FeSO_4.7H_2O$ zur Vorpolymerisatlösung und fügt aus 2 separaten Vorratsgefässen 100 Teile einer 6%igen Wasserstoffperoxidlösung und eine Mischung von 126 Teilen Isobutylacrylat und 66 Teilen Styrol gleichmässig im Verlauf von 2 Stunden zu. Die Nachpolymerisation und Hauptpolymerisation werden bei 85 °C durchgeführt. Man erhält eine feinteilige Dispersion, die einen Feststoffgehalt von 32% und einen LD-Wert von 99 hat.

Beispiel 10

Eine Mischung aus 20 Teilen (1,92 Mol) Styrol, 7 Teilen (0,41 Mol) Dimethylaminopropylmethacrylamid, 3,5 Teilen (0,486 Mol) Acrylsäure und 10 Teilen Essigsäure wurde innerhalb von 1 Stunde mit Hilfe einer Pumpe in einen auf 90 °C erhitzten Kessel gepumpt. Gleichzeitig und ebenfalls innerhalb 1 Stunde fügte man mit Hilfe einer anderen Dosiervorrichtung 2 Teile Azoisobuttersäuredinitril und 10 Teile Essigsäure zu. Das Gemisch wurde 30 min auf eine Temperatur von 90 °C erhitzt und danach in 180 Teilen Wasser gelöst. Dann setzte man 0,01 Teile Eisensulfat zu und polymerisierte bei einer Temperatur von 85 °C

darin eine Mischung von 32 Teilen Styrol und 32 Teilen Isobutylacrylat, die separat von 33 Teilen einer 6%igen Wasserstoffperoxidlösung kontinuierlich innerhalb von 2 Stunden zum Vorpolymerisat zugegeben wurde. Nach 1stündiger Nachpolymerisation bei einer Temperatur von 85 °C resultierte eine feinteilige Dispersion mit einem Feststoffgehalt von 31,4% und einem LD-Wert von 99.

Beispiele 11 bis 16

Es wurde jeweils eine Mischung aus 20 Teilen (1,92 Mol) Styrol, 20 Teilen Essigsäure, 7 Teilen (0,41 Mol) Dimethylaminopropylmethacrylamid, 3,5 Teilen (0,486 Mol) Acrylsäure hergestellt und auf verschiedene, in der Tabelle 1 angegebene Temperaturen erhitzt und danach mit 0,3 Teilen Azoisobuttersäuredinitril versetzt. Innerhalb von «t» Minuten wurden dann die in der Tabelle 1 gegebenen Teile Initiator Azoisobuttersäuredinitril in Form einer 20%igen Lösung in Aceton zugegeben. Jeweils 30 min nach Beendigung der Katalysatorzugabe wurden 180 Teile Wasser und 0,01 Teile Eisensulfat zugesetzt. Die Mischung wurde dann auf 85 °C erhitzt und diente als Vorlage für die 2. Stufe der Polymerisation, bei der jeweils eine Mischung aus 32 Teilen Styrol und 32 Teilen Isobutylacrylat unter gleichzeitiger und ebenfalls kontinuierlicher Zugabe von 33 Teilen einer 6%igen wässrigen Wasserstoffperoxidlösung innerhalb von 2 Stunden polymerisiert wurde. Die Nachpolymerisation erfolgte bei einer Temperatur von 85 °C innerhalb von 1 Stunde. Man erhielt jeweils feinteilige Dispersionen, deren Feststoffgehalte und LD-Werte in Tabelle 1 angegeben sind.

Tabelle 1

| Beispiel | T °C | Initiator Teile | Dauer t (min) | $\eta_{rel.}$ | Feststoffgehalt | LD-Wert |
|---|---|---|---|---|---|---|
| 11 | 90 | 0,4 | 30 | 1,153 | 30,9 | 96 |
| 12 | 90 | 0,4 | 45 | 1,157 | 31,6 | 96 |
| 13 | 100 | 0,4 | 30 | 1,137 | 30,5 | 98 |
| 14 | 110 | 0,8 | 30 | 1,114 | 30,1 | 99 |
| 15 | 110 | 0,8 | 30 | 1,119 | 30,5 | 99 |
| 16 | 115 | 0,8 | 30 | 1,11 | 30,2 | 98 |

Zur Bestimmung der in der Tabelle angegebenen $\eta_{rel.}$-Werte wurden die wässrige Lösung des Vorpolymerisates bei −18 °C gefriergetrocknet. 1 g dieses Produktes wurde dann in 100 ml einer Mischung aus 99 Gew.-Teilen Dimethylformamid und 1 Gew.-Teil Eisessig gelöst und bei 20 °C gemessen.

Beispiel 17

In einem Rührkessel werden 60 Teile Eisessig, 60 Teile (5,77 Mol) Styrol, 33 Teile (1,93 Mol) Diethylaminoethylacrylat und 15 Teile Acrylsäure (2,08 Mol) mit 3 Teilen Azoisobutyronitril gemischt und auf 85 °C erhitzt. Nach 30 min werden innerhalb von 1 Stunde 6 Teile Azoisobutyronitril zugesetzt. Nach weiteren 30 min wird das Vorpolymerisat ($\eta_{rel.}$ = 1,13) in 590 Teilen $H_2O$ gelöst und die Lösung auf 85 °C erhitzt. Dann fügt man 20 Teile einer 6%igen Wasserstoffperoxidlösung und 0,04 Teile $FeSO_4.7H_2O$ zu. Innerhalb von 2 Stunden gibt man 80 Teile einer 6%igen Wasserstoffperoxidlösung und ein Gemisch aus 66 Teilen Styrol und 126 Teilen Isobutylacrylat gleichmässig zu. Nach einstündiger Nachreaktion resultiert eine feinteilige Dispersion mit einem Feststoffgehalt von 30,8% und einem LD-Wert von 87%.

Beispiel 18

In einem Rührkessel werden 60 Teile Eisessig, 51,5 Teile (0,5 Mol) Styrol, 17 Teile Butylacrylat (0,13 Mol), 27,5 Teile (0,134 Mol) Dimethylaminoneopentylacrylat, 12 Teile (0,167 Mol) Acrylsäure und 3 Teile Azoisobuttersäuredinitril gemischt und auf 85 °C erhitzt. Nach 30 min werden innerhalb von 30 min 6 Teile Azoisobutyronitril zugesetzt. Nach weiteren 30 min wird das Vorpolymerisat in 590 Teilen $H_2O$ gelöst. Dann werden 20 Teile 6%iges Wasserstoffperoxid und 0,04 Teile $FeSO_4.7H_2O$ zugesetzt. Innerhalb von 2 Stunden wird bei 85 °C gleichzeitig und gleichmässig ein Gemisch aus 96 Teilen Isobutylacrylat, 96 Teilen Styrol und 80 Teilen 6%igem Wasserstoffperoxid zugefügt. Nach einstündiger Nachreaktion resultiert eine feinteilige Dispersion mit dem Feststoffgehalt 29% und dem LD-Wert 99%.

Beispiel 19

In einem Rührkessel werden 60 Teile Ameisensäure, 60 Teile (5,77 Mol) Styrol, 33 Teile (1,94 Mol) Dimethylaminopropylmethacrylat und 15 Teile (2,08 Mol) Acrylsäure und 9 Teile Azoisobutyronitril gemischt und auf 85 °C erhitzt. Die Mischung erhitzt sich auf 100 °C. Nach 2 Stunden werden 540 Teile Wasser, 20 Teile 6%iges Wasserstoffperoxid und 0,04 Teile $FeSO_4.7H_2O$ zugefügt. Bei 85 °C wird dann gleichzeitig und gleichmässig ein Gemisch aus 96 Teilen Isobutylacrylat und 96 Teilen Styrol und als getrennter Zulauf 80 Teile 6%iges Wasserstoffperoxid zugegeben. Nach einstündiger Nachreaktion resultiert eine Dispersion mit dem Feststoffgehalt 31,7% und dem LD-Wert 97%.

Beispiel 20

In einem Rührkessel werden 40 Teile Ameisensäure, 40 Teile (3,85 Mol) Styrol, 22 Teile (1,29 Mol) Dimethylaminopropylmethacrylat und 10 Teile (1,39 Mol) Acrylsäure und 9,6 Teile Azoisobutyronitril gemischt und auf 85 °C erhitzt. Das Gemisch erwärmt sich selbst auf 101 °C. Nach 1 Stunde wird es in 540 Teilen Wasser gelöst und 20 Teile 6%iges Wasserstoffperoxid und 0,04 Teile $FeSO_4.7H_2O$ zugesetzt. Bei 85 °C wird dann gleichzeitig und gleichmässig ein Gemisch aus 149 Teilen Isobutylacrylat und 79 Teilen Styrol sowie daneben 80 Teile 6%iges Wasserstoffperoxid zugegeben. Nach einstündiger Nachreaktion resultiert eine Dispersion mit einem Feststoffgehalt von 30,9% und einem LD-Wert von 93%.

Herstellung von Vergleichsdispersionen gemäss der Lehre der DE-OS-2 452 585

Vergleichsdispersion 1

In einem Rührbehälter wurden 235 Teile Wasser, 4 Teile Dimethyl-$C_{12}$-Fettalkylbenzylammoniumchlorid, 6,7 Teile Essigsäure und 0,02 Teile Eisensulfat vorgelegt und auf 85 °C erhitzt. Dann fügte man 8 Teile einer 3%igen wässrigen Wasserstoffperoxidlösung zu. Dann wurde ein Gemisch aus 12,5 Teilen (0,73 Mol) Diäthylaminoäthylacrylat und 1,8 Teilen (0,25 Mol) Acrylsäure zugegeben. Man erhitzte die Mischung 30 min auf 85 °C. In einer 2. Polymerisationsstufe wurde dann eine Mischung aus 40 Teilen Butylacrylat und 46 Teilen Acrylnitril und aus einem anderen Vorratsgefäss 32 Teile einer 3%igen wässrigen Wasserstoffperoxidlösung innerhalb von 4 Stunden kontinuierlich zugepumpt. Die Temperatur wurde noch 90 min nach Beendigung der Monomerenzugabe auf 85 °C gehalten. Man erhielt eine Dispersion mit einem Feststoffgehalt von 25% und einem LD-Wert von 81.

Vergleichsdispersion 2

In einem Rührkessel wurden 227 Teile Wasser, 20 Teile Essigsäure, 6,6 Teile einer 6%igen Wasserstoffperoxidlösung und 0,02 Teile Eisensulfat gegeben und auf 85 °C erhitzt. Dazu fügte man dann innerhalb von 3 min 12,5 Teile (0,735 Mol) Dimethylaminopropylmethacrylamid und 5 Teile (0,69 Mol) Acrylsäure. Die Vorpolymerisation war nach 30 min beendet. Danach wurde gleichzeitig eine Mischung aus 28,5 Teilen Styrol und 54 Teilen Isobutylacrylat und aus einem separaten Vorratsgefäss 27 Teile einer wässrigen 6%igen Wasserstoffperoxidlösung innerhalb von 4 Stunden gleichmässig in die auf 85 °C erhitzte Vorpolymerisatlösung gepumpt. Zur Nachreaktion wurde die Mischung noch 2 Stunden auf einer Temperatur von 85 °C gehalten. Man erhielt eine 26,5%ige wässrige Dispersion mit einem LD-Wert von 11.

Vergleichsdispersion 3

Nach der für die Vergleichsdispersion 2 gegebenen Vorschrift wurde ein gleichartiges Vorpolymerisat hergestellt, jedoch verwendete man in der 2. Stufe für die Emulsionspolymerisation eine Mischung aus 40 Teilen Butylacrylat und 46 Teilen Acrylnitril. Gleichzeitig mit dem Monomerenzulauf wurden 27 Teile einer 6%igen wässrigen Wasserstoffperoxidlösung innerhalb von 2 Stunden zugepumpt. Die Nachreaktion betrug 2 Stunden bei 85 °C. Man erhielt eine Dispersion mit einem LD-Wert von 60.

Vergleichsdispersion 4

In einem Rührkessel werden 60 Teile Eisessig, 58 Teile (5,57 Mol) Styrol, 33 Teile (1,94 Mol) Dimethylaminopropylmethacrylamid und 26 Teile (2,03 Mol) Butylacrylat mit 3 Teilen Azoisobuttersäurenitril vermischt und auf 85 °C erhitzt. Nach 30 min werden während 30 min 6 Teile Azoisobuttersäurenitril zugesetzt. Nach weiteren 60 min wird das Vorpolymerisat in 540 Teilen Wasser gelöst, mit 20 Teilen 6%iger Wasserstoffperoxidlösung und 0,04 Teilen $FeSO_4.7H_2O$ gemischt. Innerhalb von 2 Stunden werden bei 85 °C gleichzeitig und gleichmässig ein Gemisch aus 126 Teilen Isobutyronitril und 66 Teilen Styrol und daneben 80 Teile 6%iges Wasserstoffperoxid zugesetzt. Nach einstündiger Nachreaktion resultiert eine Dispersion mit dem Feststoffgehalt 29,1% und dem LD-Wert 99%.

Vergleichsdispersion 5

In einem Rührkessel werden 60 Teile Eisessig, 66 Teile (6,35 Mol) Styrol, 25 Teile (1,47 Mol) Dimethylaminopropylmethacrylamid, 17 Teile (2,0 Mol) Methylacrylat und 3 Teile Azoisobutyronitril gemischt und auf 85 °C erhitzt. Nach 30 min werden während 30 min 6 Teile Azoisobutyronitril zugesetzt. Nach weiteren 60 min werden in 540 Teilen $H_2O$ gelöst und 20 Teile 6%iges Wasserstoffperoxid und 0,04 Teile $FeSO_4.7H_2O$ zugefügt. Bei 85 °C werden dann gleichzeitig und gleichmässig ein Gemisch von 126 Teilen Isobutylacrylat und 66 Teilen Styrol und daneben 80 Teile 6%iges Wasserstoffperoxid zugesetzt. Nach einstündiger Nachreaktion resultiert eine Dispersion mit einem Feststoffgehalt von 31,1% und dem LD-Wert 99%.

Vergleichsdispersion 6
(Beispiel gemäss DE-OS-2 454 397)

In 145 Teilen Aceton lässt man bei 60 °C innerhalb von 8 Std. 190 Teile (18,2 Mol) Styrol, 10 Teile (0,78 Mol) n-Butylacrylat, 60 Teile (3,8 Mol) Dimethylaminoäthylmethacrylat, 30 Teile Ameisensäure und 20 Teile einer 20%igen Lösung von t-Butylperpivalat in Aceton unter Siedekühlung zulaufen. Nach Abschluss der Polymerisation verdünnt man mit 1000 Teilen Wasser. Zu 440 Teilen der Lösung gibt man 370 Teile Wasser. Man heizt auf 85 °C auf und gibt 5 Teile 50%ige Wasserstoffperoxidlösung und anschliessend innerhalb von 4 Stunden ein Gemisch von 125 Teilen 2-Äthylhexylacrylat und 154 Teilen Styrol sowie gleichzeitig weitere 15 Teile 50%ige wässrige Wasserstoffperoxidlösung zu. Zwei Stunden nach Beendigung des Monomerenzulaufs wird abgekühlt. Man erhält eine Dispersion mit einem Feststoffgehalt von 30,3% und dem LD-Wert 42%.

Vergleichsdispersion 7
(Beispiel gemäss DE-OS-2 454 397)

In 145 Teilen Aceton lässt man bei 60 °C innerhalb von 8 Std. 190 Teile (18,2 Mol) Styrol, 10 Teile (0,78 Mol) n-Butylacrylat, 60 Teile (3,5 Mol) Dimethylaminopropylmethacrylamid, 30 Teile Ameisensäure und 20 Teile einer 20%igen Lösung von t-Butylperpivalat in Aceton unter Siedekühlung zulaufen. Nach Abschluss der Polymerisation verdünnt man mit 1000 Teilen Wasser. Zu 440 Teilen der Lösung gibt man 370 Teile Wasser. Man heizt auf 85 °C auf und gibt 5 Teile 50%ige Wasserstoffperoxidlösung und anschliessend innerhalb von 4 Stunden ein Gemisch von 125 Teilen 2-Äthylhexylacrylat und 154 Teilen Styrol sowie gleichzeitig weitere 15 Teile 50%ige wässrige Wasserstoffperoxidlösung zu. Zwei Stunden nach Beendigung des Monomerenzulaufs wird abgekühlt. Man erhält eine Dispersion mit einem Feststoffgehalt von 30,6% und dem LD-Wert 41%.

Die LD-Werte der Vergleichsdispersionen 2 und 3 sind derart niedrig, so dass sich diese Dispersionen bei der Verwendung als Leimungsmittel für Papier unzureichende Leimungswerte ergeben. Die in den Beispielen beschriebenen Polymerdispersionen wurden nach der oben angegebenen Vorschrift als Oberflächenleimungsmittel für Papier getestet. Die Ergebnisse sind in Tabelle 2 zusammengefasst und werden mit denen der Vergleichsdispersionen 1, 4, 5, 6 und 7 als Oberflächenleimungsmittel verglichen.

Tabelle 2:
Verwendung der erfindungsgemässen Dispersionen als Oberflächenleimungsmittel

| Beispiel | Papier A Cobb | Tinten-schwimm-zeit | Papier B Cobb | Tinten-schwimm-zeit |
|---|---|---|---|---|
| 1 | 21 | 23 | 21 | 13 |
| 2 | 22 | 18 | 22 | 12 |
| 3 | 19 | 25 | 21 | 10 |
| 4 | 21 | 14 | 20 | 17 |
| 5 | 21 | 16 | 22 | 18 |
| 7 | 22 | 15 | 23 | 12 |
| 8 | 22 | 18 | 22 | 17 |
| 9 | 24 | 18 | 23 | 17 |
| 10 | 19 | 30 | 23 | 40 |
| Vergleichs-dispersion | | | | |
| 1 | 35 | 3 | 37 | 2 |
| 4 | 95 | 0 | 87 | 0,5 |
| 5 | 93 | 0 | 80 | 0,5 |
| 6 | 76 | 1 | | |
| 7 | 59 | 1 | | |

Verglichen mit den getesteten erfindungsgemässen Dispersionen ist die Vergleichsdispersion 1 gemäss DE-OS-2 452 585 schlechter, dagegen sind die rein kationischen Vergleichsdispersionen 4 und 5 wesentlich schlechter. Auch die Vergleichsdispersionen 6 und 7 sind schlechter, sie ergeben erst bei höheren Konzentrationen bessere Leimungswerte.

Die Dispersionen sind ebenso als Masseleimungsmittel für Papier verwendbar, bei der das Leimungsmittel zum Papierstoff vor der Blattbildung gegeben wird. Es wurden zwei verschiedene Papiersorten getestet. Die Ausgangsstoffe für die Herstellung der Papiere C und D hatten folgende Zusammensetzung:

Papier C:

100% Sulfitzellstoff, 30% $CaCO_3$, bezogen auf trockenen Sulfitzellstoff, 0,3%, bezogen auf trokkenes Papier, eines Copolymerisates aus Acrylamid und Acrylsäure, 35°SR; 80 g/m$^2$; alaunfrei; 12% Asche (als $CaCO_3$).

D: 50% Altpapier, 50% Wellpappe; 80 g/m$^2$; alaunfrei.

Tabelle 3:
Verwendung der Dispersion nach den Beispielen 1 bis 10 als Masseleimungsmittel für Papier

| Beispiel | Konz. % | Papier C Cobb | Tinte | Papier D Cobb | Tinte |
|---|---|---|---|---|---|
| 1 | 0,75 | 27 | 60 | 25 | 25 |
| | 1,0 | 22 | 60 | 22 | 40 |
| | 1,75 | 19 | 60 | 20 | 60 |
| 4 | 0,75 | 26 | 60 | 28 | 24 |
| | 1,0 | 23 | 60 | 24 | 47 |
| 5 | 0,75 | 33 | 60 | 25 | 60 |
| | 1,0 | 25 | 60 | 20 | 60 |
| 6 | 0,75 | 50 | 30 | 72 | 10 |
| | 1,0 | 36 | 60 | 35 | 50 |
| 7 | 0,75 | 32 | 45 | 38 | 25 |
| 8 | 0,75 | 28 | 27 | 28 | 20 |
| Vergleichs-dispersion | | | | | |
| 1 | 1,0 | 156 | 0 | 151 | 0 |
| 4 | 0,75 | 58 | 30 | 68 | 9 |
| | 1,0 | 34 | 60 | 35 | 15 |
| | 1,75 | 27 | 60 | 28 | 45 |
| 5 | 0,75 | 192 | 2 | 45 | 20 |
| | 1,0 | 40 | 30 | 34 | 55 |
| | 1,75 | 30 | 30 | 26 | 60 |
| 6 | 1,0 | 44 | 45 | | |
| 7 | 1,0 | 95 | 10 | | |

Auch bei der Masseleimung sind die getesteten erfindungsgemässen Dispersionen deutlich besser als die untersuchten Vergleichsdispersionen.

**Patentansprüche**

1. Feinteilige, stickstoffhaltige Monomere einpolymerisiert enthaltende Polymerdispersionen, die durch eine zweistufige Polymerisation hergestellt sind, dadurch gekennzeichnet, dass man in der ersten Polymerisationsstufe eine Monomerenmischung, die pro 1 Mol

a) eines stickstoffhaltigen Monomeren der Formeln

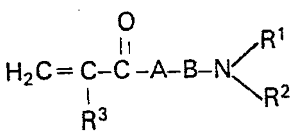

(I)

oder

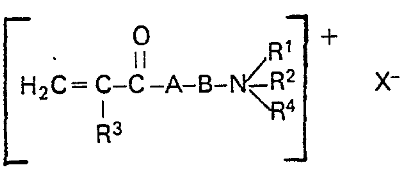

(II)

in denen
A = O, NH,
B = $C_nH_{2n}$, n = 1 bis 8,
$R^1$, $R^2$ = $C_mH_{2m+1}$, m = 1 bis 4,
$R^3$ = H, $CH_3$,
$X^-$ = $OH^-$, $Cl^-$, $Br^-$, $CH_3$–$OSO_3H^-$ und
$R^4$ = $C_mH_{2m+1}$, m = 1 bis 4
bedeuten,

b) 2,5 bis 10 Mol mindestens eines nichtionischen, hydrophoben, äthylenisch ungesättigten Monomeren, wobei diese Monomeren, wenn sie für sich alleine polymerisiert werden, hydrophobe Polymerisate bilden,

c) 0,5 bis 1,5 Mol einer äthylenisch ungesättigten Carbonsäure oder Maleinsäureanhydrid und

d) 0 bis 7 Mol eines nichtionischen, hydrophilen, äthylenisch ungesättigten Monomeren enthält,

in einem mit Wasser mischbaren Lösungsmittel, das bis zu 15 Gew.-% Wasser enthalten kann, nach Art einer Lösungscopolymerisation ein niedrig-molekulares Vorpolymerisat herstellt, das in einer 1%igen Lösung aus einer Mischung von 99 Gew.-Teilen Dimethylformamid und 1 Gew.-Teil Eisessig bei einer Temperatur von 20 °C eine Viskosität von 1,06 bis 1,40 (gemessen mit einem Ubbelohde-Viskosimeter) hat,

die Lösung des Vorpolymerisats mit Wasser im Gew.-Verhältnis 1:3 bis 1:50 verdünnt und in dieser Polymerlösung in der zweiten Stufe der Polymerisation, bezogen auf 1 Gew.-Teil des Lösungspolymerisats, 1 bis 32 Gew.-Teile mindestens eines nichtionischen, hydrophoben, äthylenisch ungesättigten Monomeren, wobei diese Monomeren dem Monomeren b) des Vorpolymerisates entsprechen, nach Art einer Emulsionspolymerisation in Gegenwart von üblichen Mengen wasserlöslicher Polymerisationsinitiatoren polymerisiert.

2. Feinteilige, stickstoffhaltige Monomere einpolymerisiert enthaltende Polymerdispersionen gemäss Anspruch 1, dadurch gekennzeichnet,

dass die Monomerenmischung als Komponente (a) Verbindungen der Formel

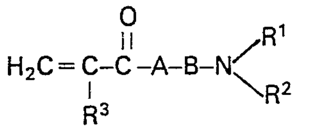
(I)

enthält, in der
A = O, NH,
B = $C_nH_{2n}$, n = 1 bis 8,
$R^1$, $R^2$ = $C_mH_{2m+1}$, m = 1 bis 4 und
$R^3$ = H, $CH_3$
bedeutet.

3. Feinteilige, stickstoffhaltige Monomere einpolymerisiert enthaltende Polymerdispersionen nach den Ansprüchen 1 bis 2, dadurch gekennzeichnet, dass man in der ersten Polymerisationsstufe Essigsäure als mit Wasser mischbares Lösungsmittel verwendet.

4. Feinteilige, stickstoffhaltige Monomere einpolymerisiert enthaltende Polymerdispersionen nach den Ansprüchen 1 bis 3, dadurch gekennzeichnet, dass man die Polymerisation in der zweiten Stufe in Abwesenheit üblicher Emulgatoren durchführt.

5. Verwendung der feinteiligen, stickstoffhaltige Monomere einpolymerisiert enthaltenden Polymerdispersionen nach den Ansprüchen 1 bis 4 als Masse- und Oberflächenleimungsmittel für Papier.

**Revendications**

1. Dispersions de polymères, contenant en liaison polymère des monomères azotés, en fines particules, préparées par une polymérisation en deux stades, caractérisées en ce que, dans un premier stade, on prépare à partir d'un mélange de monomères, contenant par mole de

a) un monomère azoté de l'une des formules

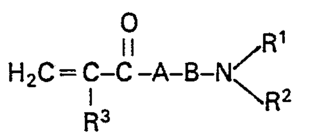
(I)

ou

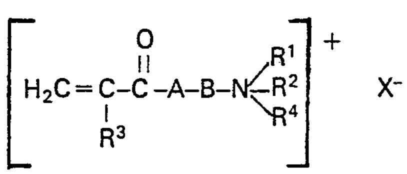
(II)

dans lesquelles
A = O ou NH
B = $C_nH_{2n}$ avec n = 1 à 8
$R^1$ et $R^2$ = $C_mH_{2m+1}$ avec m = 1 à 4
$R^3$ = H ou $CH_3$
$R^4$ = $C_mH_{2m+1}$ avec m = 1 à 4 et
$X^-$ = $OH^-$, $Cl^-$, $Br^-$ ou $CH_3{-}OSO_3H^-$;

b) 2,5 à 10 moles d'au moins un monomère à insaturation éthylénique non ionique hydrophobe, choisi parmi les monomères qui, lorsqu'ils sont homopolymérisés, forment des polymères hydrophobes;

c) 0,5 à 1,5 mole d'anhydride maléique ou d'un acide carboxylique à insaturation éthylénique et

d) 0 à 7 moles d'un monomère à insaturation éthylénique non ionique hydrophyle,

par une copolymérisation en solution dans un solvant miscible à l'eau et pouvant contenir jusqu'à 15% en poids d'eau, un pré-polymère à bas poids moléculaire qui, en solution à 1% dans un mélange de 99 parties en poids de diméthyl-formamide et de 1 partie en poids d'acide acétique glacial, possède à 20 °C une viscosité (mesurée dans un viscosimètre de Ubbelohde) de 1,06 à 1,40;

on dilue la solution de ce pré-polymère avec de l'eau dans un rapport pondéral de 1:3 à 1:50, puis, dans le deuxième stade de polymérisation, on polymérise dans cette solution de polymère, par partie en poids du polymère en solution, par une polymérisation en émulsion en présence de proportions usuelles d'initiateurs de polymérisation hydrosolubles, entre 1 et 32 parties en poids d'au moins un monomère à insaturation éthylénique non ionique hydrophobe analogue au monomère b) du pré-polymère.

2. Dispersions de polymères, contenant en liaison polymère des monomères azotés, en fines particules suivant la revendication 1, caractérisées en ce que, dans le mélange de monomères, le composant (a) est un composé de la formule

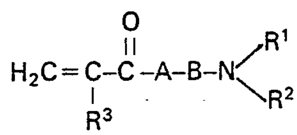
(I)

dans laquelle
A = O ou NH
B = $C_nH_{2n}$ avec n = 1 à 8
$R^1$ et $R^2$ = $C_mH_{2m+1}$ avec m = 1 à 4 et
$R^3$ = H ou $CH_3$.

3. Dispersions de polymères, contenant en liaison polymère des monomères azotés, en fines particules suivant les revendications 1 et 2, caractérisées en ce que l'on emploie dans le premier stade de polymérisation l'acide acétique comme solvant miscible à l'eau.

4. Dispersions de polymères, contenant en liaison polymère des monomères azotés, en fines particules suivant les revendications 1 à 3, caractérisées en ce que, dans le deuxième stade, la polymérisation est effectuée en l'absence des émulsionnants usuels.

5. Utilisation des dispersions de polymères, contenant en liaison polymère des monomères azotés, en fines particules suivant les revendications 1 à 4 comme produit pour l'encollage superficiel ou dans la masse de papiers.

**Claims**

1. A finely divided polymer dispersion which contains polymerized units of nitrogen-containing monomers, and is obtained by a two-stage polymerization reaction, wherein, in the first polymerization stage, a low molecular weight prepolymer, which has a viscosity of from 1.06 to 1.40 (measured in an Ubbelohde viscometer) in a 1% strength solution of a mixture of 99 parts by weight of dimethyl formamide and 1 part by weight of glacial acetic acid at 20 °C, is prepared in a water-miscible solvent, which may contain up to 15% by weight of water, in the manner of a solution copolymerization from a monomer mixture which contains .

(a) per mole of a nitrogen-containing monomer of the formula

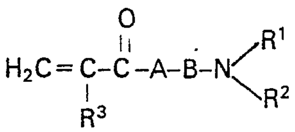 (I)

or

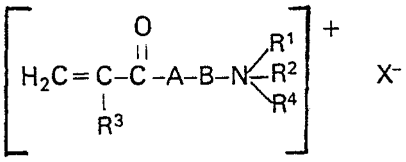 (II)

where A is O or NH, B is $C_nH_{2n}$, n being from 1 to 8, $R^1$ and $R^2$ are each $C_mH_{2m+1}$, m being from 1 to 4, $R^3$ is H or $CH_3$, $X_4^-$ is $OH^-$, $Cl^-$, $Br^-$ or $CH_3$–$OSO_3H^-$, and $R^4$ is $C_mH_{2m+1}$, m being from 1 to 4,

(b) 2.5 to 10 moles of at least one nonionic, hydrophobic, ethylenically unsaturated monomer which, if it is polymerized on its own, forms a hydrophobic polymer,

(c) 0.5 to 1.5 moles of an ethylenically unsaturated carboxylic acid or maleic anhydride, and

(d) 0 to 7 moles of a nonionic, hydrophilic, ethylenically unsaturated monomer,

the solution of the prepolymer is diluted with water in a weight ratio of from 1:3 to 1:50 and, in the second polymerization stage, 1 to 32 parts by weight of at least one nonionic, hydrophobic, ethylenically unsaturated monomer, which is the same as monomer (b) of the prepolymer, are polymerized per part by weight of the solution polymer in this polymer solution in the manner of an emulsion polymerization in the presence of a usual amount of a water-soluble polymerization initiator.

2. A finely divided polymer dispersion which contains polymerized units of nitrogen-containing monomers, as claimed in claim 1, wherein the monomer mixture contains, as component (a), a compound of the formula

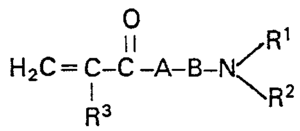 (I)

where A is O or NH, B is $C_nH_{2n}$, n being from 1 to 8, $R^1$ and $R^2$ are each $C_mH_{2m+1}$, m being from 1 to 4, and $R^3$ is H or $CH_3$.

3. A finely divided polymer dispersion which contains polymerized units of nitrogen-containing monomers, as claimed in claims 1 and 2, wherein, in the first polymerization stage, acetic acid is used as the water-miscible solvent.

4. A finely divided polymer dispersion which contains polymerized units of nitrogen-containing monomers, as claimed in claims 1 to 3, wherein, in the second stage, the polymerization is carried out in the absence of conventional emulsifiers.

5. The use of a finely divided polymer dispersion which contains polymerized units of nitrogen-containing monomers, as claimed in claims 1 to 4, as a beater or surface sizing agent for paper.